# EUROPEAN PATENT APPLICATION

(11) **EP 4 468 763 A1**
(43) Date of publication of application: **27.11.2024**
(21) Application number: 22936873.3
(22) Date of filing: 13.04.2022
(51) Int. Cl.: H04W 8/22

(54) **DATA TRANSMISSION METHOD FOR SHORT-DISTANCE WIRELESS COMMUNICATION AND COMMUNICATION APPARATUS**

(71) Applicant: Huawei Technologies Co., Ltd., Shenzhen, Guangdong 518129 (CN)
(72) Inventor: WANG, Jian, Shenzhen, Guangdong 518129 (CN); ZHANG, Shengjie, Shenzhen, Guangdong 518129 (CN); LI, Chao, Shenzhen, Guangdong 518129 (CN); GONG, Xingsheng, Shenzhen, Guangdong 518129 (CN); LIANG, Fangli, Shenzhen, Guangdong 518129 (CN)
(74) Representative: Goddar, Heinz J.
(86) International application number: PCT/CN2022/086717
(87) International publication number: WO 2023/197223

(57) **Abstract**

Embodiments of this disclosure relate to the communication field, and provide a data transmission method for short-range wireless communication, and a communication apparatus. The method includes: A first device sends a plurality of first data packets to a second device, where the first device and the second device perform short-range wireless communication. The first device receives a second data packet from the second device, where a first field in the second data packet includes a plurality of indications indicating whether the plurality of first data packets are successfully received. In this manner, when the first device using short-range wireless communication performs data transmission with the second device, the second device respectively indicates, by using the plurality of indications in the second data packet, whether the plurality of first data packets are successfully received, which can avoid frequent switching between sending and receiving, reduce a duration of short-range wireless communication, and improve communication efficiency.

## Description

### TECHNICAL FIELD

Embodiments of this disclosure mainly relate to the communication field, and more specifically, to a data transmission method for short-range wireless communication, and a communication apparatus.

### BACKGROUND

A short-range wireless communication technology such as a Bluetooth technology is based on a low-cost short-range wireless connection, and is one of important functions of most terminal devices. Two different terminal devices may establish a fast connection through Bluetooth, and perform transmission of various types of data such as a file, an audio, and a video. In a current transmission solution, each time completing transmission of a data packet, a transmitting end based on Bluetooth transmission waits for a feedback from a receiving end, and performs transmission of a next data packet based on the feedback being acknowledgment (Acknowledgement, ACK) or performs retransmission based on the feedback being negative acknowledgment (Negative Acknowledgement, NACK). However, such a transmission solution is inefficient.

### SUMMARY

Embodiments of this disclosure provide a data transmission solution for short-range wireless communication, so that a same data packet includes a plurality of indications for a plurality of data packets, thereby improving transmission efficiency.

According to a first aspect of this disclosure, a data transmission method for short-range wireless communication is provided. The method includes: A first device sends a plurality of first data packets to a second device, where the first device and the second device perform short-range wireless communication. The first device receives a second data packet from the second device, where a first field in the second data packet includes a plurality of indications indicating whether the plurality of first data packets are successfully received.

In this manner, when the first device using short-range wireless communication performs data transmission with the second device, the second device respectively indicates, by using the plurality of indications in the second data packet, whether the plurality of first data packets are successfully received, which can avoid frequent switching between sending and receiving, reduce a communication duration, and improve communication efficiency.

In some embodiments of the first aspect, the first field includes at least one indication indicating that at least one first data packet of the plurality of first data packets is not successfully received, and the method further includes: The first device sends a plurality of third data packets to the second device, where a quantity of the plurality of third data packets is equal to a quantity of the plurality of first data packets, and the plurality of third data packets include the at least one first data packet.

In this manner, retransmission is performed on the at least one first data packet on which transmission is not successfully performed, rather than all the plurality of first data packets, thereby avoiding redundant transmission.

In some embodiments of the first aspect, the method further includes: The first device determines the quantity of the plurality of first data packets through negotiation with the second device. In this manner, the first device and the second device can fully consider respective attributes, communication conditions, and the like in a negotiation process.

In some embodiments of the first aspect, the first field is in a header of the second data packet, and the quantity of the plurality of first data packets is less than or equal to a quantity of bits of the first field. In this manner, this solution can be implemented only by modifying a part of a format of a transmitted data packet, which has compatibility and can improve generality.

In some embodiments of the first aspect, a second field in the second data packet is used to carry data sent by the second device to the first device, or the second field in the second data packet is empty. In this manner, the second device can determine a payload in the second field based on an actual transmission requirement, which is applicable to various application scenarios and meet various communication requirements.

In some embodiments of the first aspect, the method further includes: The first device receives at least one fourth data packet from the second device, where a first field in the at least one fourth data packet includes indications same as those in the first field in the second data packet. In this manner, the second data packet and the at least one fourth data packet each include the plurality of indications, which ensures that the first device can successfully receive the plurality of indications, and avoids unnecessary retransmission of the plurality of first data packets.

In some embodiments of the first aspect, that a first device sends a plurality of first data packets to a second device includes: The first device continuously sends the plurality of first data packets in a frequency hopping manner. This manner can avoid sending the plurality of first data packets at a same frequency, and improve an anti-interference capability.

According to a second aspect of this disclosure, a data transmission method for short-range wireless communication is provided. The method includes: A second device receives a plurality of first data packets from a first device, where the first device and the second device perform short-range wireless communication. The second device sends a second data packet to the first device, where a first field in the second data packet includes a plurality of indications indicating whether the plurality of first data packets are successfully received.

In some embodiments of the second aspect, the second device fails to receive at least one first data packet in the plurality of first data packets, the first field includes at least one indication indicating that the at least one first data packet is not successfully received, and the method further includes: The second device receives a plurality of third data packets from the first device, where a quantity of the plurality of third data packets is equal to a quantity of the plurality of first data packets, and the plurality of third data packets include the at least one first data packet.

In some embodiments of the second aspect, the method further includes: The second device determines the quantity of the plurality of first data packets through negotiation with the first device.

In some embodiments of the second aspect, the first field is in a header of the second data packet, and the quantity of the plurality of first data packets is less than or equal to a quantity of bits of the first field.

In some embodiments of the second aspect, a second field in the second data packet is used to carry data sent by the second device to the first device, or the second field in the second data packet is empty.

In some embodiments of the second aspect, the method further includes: The second device sends at least one fourth data packet to the first device, where a first field in the at least one fourth data packet includes an indication that is the same as that in the first field in the second data packet.

In some embodiments of the second aspect, that a second device receives a plurality of first data packets from a first device includes: The second device receives the plurality of first data packets from the first device in a frequency hopping manner.

According to a third aspect of this disclosure, a communication apparatus is provided. The apparatus includes: a sending module, configured to send a plurality of first data packets to a second device, where the communication apparatus and the second device perform short-range wireless communication; and a receiving module, configured to receive a second data packet from the second device, where a first field in the second data packet includes a plurality of indications indicating whether the plurality of first data packets are successfully received.

In some embodiments of the third aspect, the first field includes at least one indication indicating that at least one first data packet of the plurality of first data packets is not successfully received, and the sending module is further configured to send a plurality of third data packets to the second device, where a quantity of the plurality of third data packets is equal to a quantity of the plurality of first data packets, and the plurality of third data packets include the at least one first data packet.

In some embodiments of the third aspect, the apparatus further includes a negotiation module, configured to determine the quantity of the plurality of first data packets through negotiation with the second device.

In some embodiments of the third aspect, the first field is in a header of the second data packet, and the quantity of the plurality of first data packets is less than or equal to a quantity of bits of the first field.

In some embodiments of the third aspect, a second field in the second data packet is used to carry data sent by the second device to the communication apparatus, or the second field in the second data packet is empty.

In some embodiments of the third aspect, the receiving module is further configured to receive at least one fourth data packet from the second device, where a first field in the at least one fourth data packet includes indications same as those in the first field in the second data packet.

In some embodiments of the third aspect, the sending module is configured to continuously send the plurality of first data packets in a frequency hopping manner.

According to a fourth aspect of this disclosure, a communication apparatus is provided. The apparatus includes: a receiving module, configured to receive a plurality of first data packets from a first device, where the first device and the communication apparatus perform short-range wireless communication; and a sending module, configured to send a second data packet to the first device, where a first field in the second data packet includes a plurality of indications indicating whether the plurality of first data packets are successfully received.

In some embodiments of the fourth aspect, the receiving module fails to receive at least one first data packet in the plurality of first data packets, the first field includes at least one indication indicating that the at least one first data packet is not successfully received, and the receiving module is further configured to receive a plurality of third data packets from the first device, where a quantity of the plurality of third data packets is equal to a quantity of the plurality of first data packets, and the plurality of third data packets include the at least one first data packet.

In some embodiments of the fourth aspect, the apparatus further includes a negotiation module, configured to determine the quantity of the plurality of first data packets through negotiation with the first device.

In some embodiments of the fourth aspect, the first field is in a header of the second data packet, and the quantity of the plurality of first data packets is less than or equal to a quantity of bits of the first field.

In some embodiments of the fourth aspect, a second field in the second data packet is used to carry data sent by the communication apparatus to the first device, or the second field in the second data packet is empty.

In some embodiments of the fourth aspect, the sending module is further configured to send at least one fourth data packet to the first device, where a first field in the at least one fourth data packet includes indications same as those in the first field in the second data packet.

In some embodiments of the fourth aspect, the receiving module is configured to receive the plurality of first data packets from the first device in a frequency hopping manner.

According to a fifth aspect of this disclosure, a data transmission method for short-range wireless communication is provided. The method includes: A second device generates a data frame, where a plurality of bits in a first field in the data frame indicate whether a plurality of first data packets from a first device are successfully received; and the second device sends the data frame to the first device.

In some embodiments of the fifth aspect, the first field is in a header of the data frame, the first field has a preset first quantity of bits, and a quantity of the plurality of first data packets is less than or equal to the first quantity of bits.

In some embodiments of the fifth aspect, the data frame further includes a second field, the second field has a preset second quantity of bits, the second field includes a payload header field and a payload body field, and a sequence number field in the payload header field indicates a sequence number of data in the payload body field.

In some embodiments of the fifth aspect, the data frame further includes at least one of an access code field, a guard field, a synchronization field, and a trailer field.

According to a sixth aspect of this disclosure, a communication apparatus is provided. The communication apparatus includes a generation module and a sending module. The generation module is configured to generate a data frame, where a plurality of bits in a first field in the data frame indicate whether a plurality of first data packets from a first device are successfully received. The sending module is configured to send the data frame to the first device.

In some embodiments of the sixth aspect, the first field is in a header of the data frame, the first field has a preset first quantity of bits, and a quantity of the plurality of first data packets is less than or equal to the first quantity of bits.

In some embodiments of the sixth aspect, the data frame further includes a second field, the second field has a preset second quantity of bits, the second field includes a payload header field and a payload body field, and a sequence number field in the payload header field indicates a sequence number of data in the payload body field.

In some embodiments of the sixth aspect, the data frame further includes at least one of an access code field, a guard field, a synchronization field, and a trailer field.

According to a seventh aspect of this disclosure, a communication apparatus is provided. The communication apparatus includes a processor, a transceiver, and a memory. The memory stores instructions executed by the processor. When the instructions are executed by the processor, the communication apparatus is enabled to implement, by using the transceiver, an operation of the method according to any one of the first aspect or embodiments of the first aspect.

According to an eighth aspect of this disclosure, a communication apparatus is provided. The communication apparatus includes a processor, a transceiver, and a memory. The memory stores instructions executed by the processor. When the instructions are executed by the processor, the communication apparatus is enabled to implement, by using the transceiver, an operation of the method according to any one of the second aspect or embodiments of the second aspect.

According to a ninth aspect of this disclosure, a communication apparatus is provided. The communication apparatus includes a processor, a transceiver, and a memory. The memory stores instructions executed by the processor. When the instructions are executed by the processor, the communication apparatus is enabled to implement an operation of the method according to any one of the second aspect or embodiments of the second aspect.

According to a tenth aspect of this disclosure, a computer-readable storage medium is provided. The computer-readable storage medium stores computer-executable instructions. When the computer-executable instructions are executed by a processor, an operation of the method according to any one of the first aspect or embodiments of the first aspect, or an operation of the method according to any one of the second aspect or embodiments of the second aspect, or an operation of the method according to any one of the third aspect or embodiments of the third aspect is implemented.

According to an eleventh aspect of this disclosure, a chip or a chip system is provided. The chip or the chip system includes a processing circuit, and is configured to perform an operation of the method according to any one of the first aspect or embodiments of the first aspect, or an operation of the method according to any one of the second aspect or embodiments of the second aspect, or an operation of the method according to any one of the third aspect or embodiments of the third aspect.

According to a twelfth aspect of this disclosure, a computer program or a computer program product is provided. The computer program or the computer program product is tangibly stored in a computer-readable medium and includes computer-executable instructions. When the computer-executable instructions are executed, an operation of the method according to any one of the first aspect or embodiments of the first aspect, or an operation of the method according to any one of the second aspect or embodiments of the second aspect, or an operation of the method according to any one of the third aspect or embodiments of the third aspect is implemented.

### BRIEF DESCRIPTION OF DRAWINGS

The foregoing and other features, advantages, and aspects of embodiments of this application become more obvious with reference to the accompanying drawings and with reference to the following detailed descriptions. In the accompanying drawings, same or similar reference numerals represent same or similar elements.
FIG. 1 is a schematic diagram of Bluetooth transmission;
FIG. 2 is a schematic diagram of a scenario to which an embodiment of this disclosure is applied;
FIG. 3 is a diagram of signaling interaction in a data transmission process according to some embodiments of this disclosure;
FIG. 4 is a schematic diagram of a time sequence of data transmission according to some embodiments of this disclosure;
FIG. 5 is a schematic diagram of a frame format according to some embodiments of this disclosure;
FIG. 6 is a schematic diagram of a time sequence of data transmission according to some embodiments of this disclosure;
FIG. 7 is a schematic block diagram of a communication apparatus according to some embodiments of this disclosure;
FIG. 8 is a schematic block diagram of a communication apparatus according to some embodiments of this disclosure;
FIG. 9 is a schematic block diagram of a communication apparatus according to some embodiments of this disclosure; and
FIG. 10 is a schematic block diagram of an example device that may be used to implement an embodiment of this disclosure.

### DESCRIPTION OF EMBODIMENTS

Embodiments of this disclosure are described in more detail in the following with reference to the accompanying drawings. Although some embodiments of this disclosure are shown in the accompanying drawings, it should be understood that this disclosure may be implemented in various forms, and should not be construed as being limited to embodiments described herein. On the contrary, these embodiments are provided so that this disclosure will be thoroughly and completely understood. It should be understood that the accompanying drawings and embodiments of this disclosure are merely used as examples, but are not intended to limit the protection scope of this disclosure.

In this disclosure, the term "terminal device" refers to any terminal device that can perform wired or wireless communication with a network device or between terminal devices. The terminal device may be referred to as user equipment (User Equipment, UE). The terminal device may be a mobile terminal, a fixed terminal, or a portable terminal of any type. For example, the terminal device may include a mobile phone, a station, a unit, a device, a mobile terminal (Mobile Terminal, MT), a subscription station, a portable subscription station, an internet node, a communicator, a desktop computer, a laptop computer, a notebook computer, a tablet computer, a personal communication system device, a personal navigation device, a personal digital assistant (Personal Digital Assistant, PDA), a positioning device, a radio broadcast receiver, an e-book device, a game device, an internet of things (Internet of Things, IoT) device, a vehicle-mounted device, an airplane, a virtual reality (Virtual Reality, VR) device, an augmented reality (Augmented Reality, AR) device, a wearable device, a terminal device in a 5G network, any terminal device in an evolved public land mobile network (Public Land Mobile Network, PLMN), another device for communication, or any combination thereof. This is not limited in embodiments of this disclosure.

The terminal devices may establish a wireless connection by using a short-range communication protocol, and perform transmission of various types of data such as a file, an audio, and a video. For example, short-range wireless communication may include but is not limited to Bluetooth communication, near field communication (Near Field Communication, NFC), infrared data association (Infrared Data Association, IrDA) communication, ZigBee communication, and the like. To simplify illustration, Bluetooth communication is used as an example for description in the following embodiments of this application. However, it should be understood that embodiments of this application are not limited thereto.

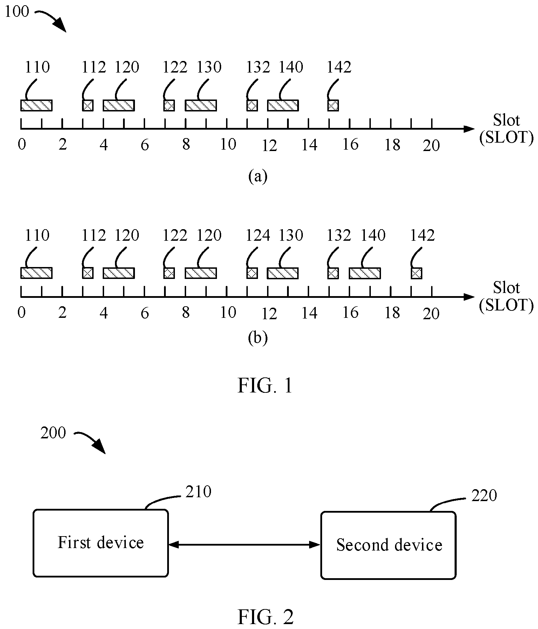

FIG. 1 is a schematic diagram of Bluetooth transmission 100. Bluetooth asynchronous connection link (Asynchronous Connectionless Link, ACL) transmission is used as an example. A transmitting end performs transmission at an even-numbered slot and a receiving end performs transmission at an odd-numbered slot. It is assumed that the transmitting end starts data transmission from a slot 0. Refer to FIG. 1. The transmitting end sends a data packet 110 at the slot 0, which occupies 1.5 slots. Then, the receiving end sends a feedback 112 at a slot 3, and the feedback is assumed to be ACK. The transmitting end may send a next data packet 120 at a slot 4 based on the received ACK. Then, the receiving end sends a feedback 122 at a slot 7.

(a) in the figure shows a case in which the feedback 122 is ACK. The transmitting end sends a next data packet 130 at a slot 8. Then, the receiving end sends a feedback 132 at a slot 11, and the feedback is assumed to be ACK. The transmitting end further sends a next data packet 140 at the slot 12. Then, the receiving end sends a feedback 142 at the slot 15, and the feedback is assumed to be ACK. This completes transmission of the data packet 110 to the data packet 140 from the slot 0 to the slot 16. In other words, a duration is 16 slots.

(b) in the figure shows a case in which the feedback 122 is NACK. The transmitting end retransmits the data packet 120 at a slot 8. Then, the receiving end sends a feedback 124 at a slot 11, and the feedback is assumed to be ACK. Then, the transmitting end sends a next data packet 130 at a slot 12. Then, the receiving end sends a feedback 132 in a slot 15, and the feedback is assumed to be ACK. The transmitting end further sends a next data packet 140 at a slot 16. Then, the receiving end sends a feedback 142 at a slot 19, and the feedback is assumed to be ACK. This completes transmission of the data packet 110 to the data packet 140 from the slot 0 to the slot 20. In other words, a duration is 20 slots.

In a current transmission solution, each time completing transmission of a data packet, a transmitting end based on Bluetooth transmission waits for a feedback from a receiving end, and performs transmission of a next data packet based on the feedback being ACK or performs retransmission based on the feedback being NACK. However, such a transmission solution is time-consuming, resulting in low transmission efficiency.

To resolve the foregoing problem and another potential problem, embodiments of this disclosure provides a data transmission solution for short-range wireless communication. A first device can continuously perform transmission of a plurality of first data packets, and a second device includes a plurality of indications corresponding to the plurality of first data packets in a same second data packet for feedback. This can improve a communication transmission rate, and ensure communication efficiency.

FIG. 2 is a schematic diagram of a scenario 200 to which an embodiment of this disclosure is applied. The scenario 200 includes a first device 210 and a second device 220, and the first device 210 and the second device 220 can perform short-range wireless communication, for example, perform a wireless connection through Bluetooth. It may be understood that the first device 210 and the second device 220 each may be implemented as a terminal device, and the first device 210 and the second device 220 may be of a same type or different types. For example, the first device 210 is implemented as a notebook computer, a smartphone, or a smart watch, and the second device 220 is implemented as a smartphone, a smart headset, or a vehicle-mounted device. This is not limited in this disclosure.

It should be noted that a protocol for Bluetooth communication in embodiments of this disclosure may be a Bluetooth (Bluetooth, BT) protocol, a Bluetooth low energy (Bluetooth Low Energy, BLE) protocol, or the like. This is not limited in this disclosure.

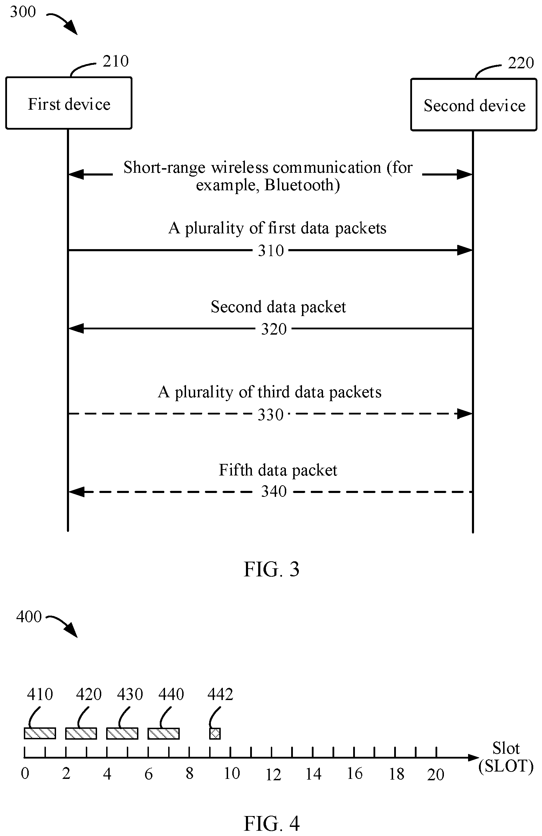

FIG. 3 is a diagram of signaling interaction in a data transmission process 300 according to some embodiments of this disclosure. The process 300 relates to a first device 210 and a second device 220.

In a process 310, the first device 210 sends a plurality of first data packets to the second device 220. To simplify illustration, it may be assumed that a quantity of the plurality of first data packets is N1.

Specifically, that the first device 210 sends the plurality of first data packets may include: The first device 210 sends one of the plurality of first data packets in a first sending slot, and then sends a next one in the plurality of first data packets in a next adjacent second sending slot without waiting for a feedback (ACK or NACK) for the first data packet, ..., until the plurality of first data packets are all sent. If it is assumed that the first device 210 sends the first data packet at an even-numbered slot, the first sending slot, the second sending slot, and the like each are an even-numbered slot.

FIG. 4 is a schematic diagram of a time sequence 400 of data transmission according to the some embodiments of the disclosure. In FIG. 4, it is assumed that N1=4, and the plurality of first data packets are data packets 410 to 440. Refer to FIG. 4. The first device 210 may start to send the data packet 410 at a slot 0, start to send the data packet 420 at a slot 2, start to send the data packet 430 at a slot 4, and start to send the data packet 440 at a slot 6. Therefore, the first device 210 sends the N 1=4 first data packets from the slot 0 to a slot 8.

In the some embodiments of this disclosure, the plurality of first data packets may be sent in a frequency hopping manner. For example, a frequency difference between every two adjacent first data packets is △. This can avoid sending at only one frequency, and improve an anti-interference capability.

In a process 320, the second device 220 sends a second data packet to the first device 210, where a first field in the second data packet includes a plurality of indications indicating whether the plurality of first data packets are successfully received.

In embodiments of this disclosure, the quantity of the plurality of first data packets may be determined by the first device 210 and the second device 220 through negotiation. In other words, before the process 310, the first device 210 and the second device 220 may determine N1 through negotiation, where N1 is a positive integer greater than 2. For example, it may be assumed that N1=4.

If it is assumed that the second device 220 sends the second data packet at an odd-numbered slot. Refer to FIG. 4. At a slot 9, the second device 220 sends the second data packet 442 including an indication 1, an indication 2, an indication 3, and an indication 4 that respectively indicate whether the data packet 410, the data packet 420, the data packet 430, and the data packet 440 are successfully received. Therefore, the second device 220 sends the second data packet at a period between the slot 9 and the slot 10.

In some examples, it is assumed that the indication 1, the indication 2, the indication 3, and the indication 4 in FIG. 4 each are ACK. In this case, in an example in FIG. 4, transmission of the data packets 410 to 440 is completed from the slot 0 to the slot 10. In other words, a duration is 10 slots. Compared with that in (a) in FIG. 1, it can be found that the duration is shortened (16-10)/16=37.5%.

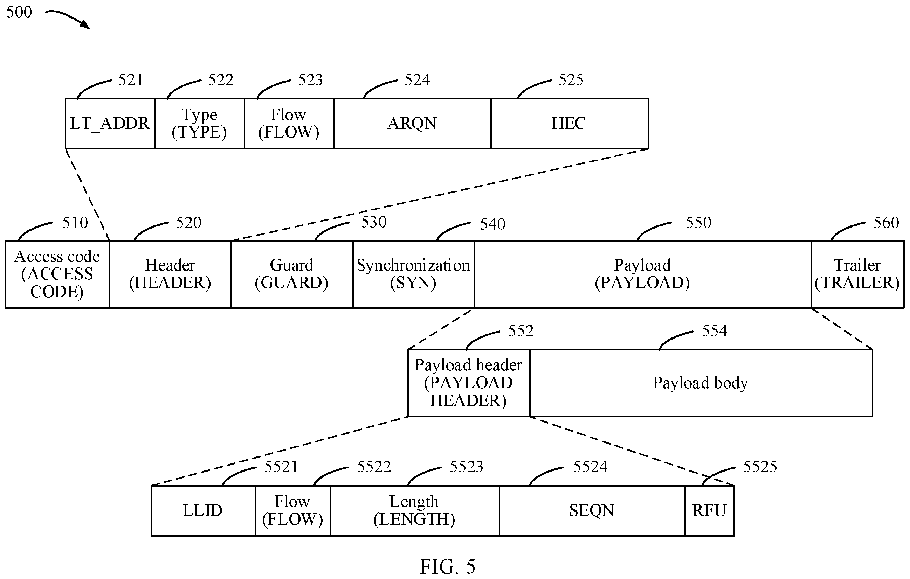

In the some embodiments of this disclosure, data packets for short-range wireless communication transmission each may have a same frame format. In other words, a data packet (for example, the first data packet) sent by the first device 210 and a data packet (for example, the second data packet) sent by the second device 220 may have a same frame format. Optionally, the first field may be in a header of the second data packet. Optionally, the header may also be referred to as a packet header, a header file, another name, or the like. This is not limited in this application. In an example, the first field may be an acknowledgment indication (Acknowledge Indication, ARQN) field, as shown in the following with reference to FIG. 5.

FIG. 5 is a schematic diagram of a frame format 500 according to the some embodiments of this disclosure. A plurality of fields in the frame format 500 are shown in FIG. 5, and include an access code (Access Code) 510, a header (Header) 520, guard (Guard) 530, synchronization (SYNC) 540, a payload (Payload) 550, and a trailer (Trailer) 560, where the payload 550 includes a payload header 552 and a payload body 554. Optionally, the payload 550 may occupy 3 to 369 bytes.

In some examples, the payload header 552 may include a logical link identifier (Logical Link Identifier, LLID) field 5521, a flow (Flow) field 5522, a length (Length) field 5523, a sequence number (Sequence Number, SEQN) field 5524, and a reserved for use (Reserved For Use, RFU) field 5525. In some examples, the header 520 may include a logical transport address (LT_ADDR) field 521, a type field 522, a flow field 523, an acknowledgment indication (Acknowledge Indication, ARQN) field 524, and a header error control (Header Error Control, HEC) field 525.

In embodiments of this disclosure, the sequence number field 5524 may be used to carry a sequence number of a data packet (for example, the first data packet). For example, the sequence number field 5524 may occupy 10 bits (bits) or another length. In embodiments of this disclosure, the ARQN field 524 may be used to carry feedbacks for a plurality of data packets (for example, the plurality of first data packets). For example, the ARQN field 524 may occupy n bits, where n is greater than or equal to N1. In an example, it may be assumed that n=8. Therefore, the frame format 500 can be used to carry feedback information corresponding to transmission of eight data packets.

In addition, the logical transport address field 521 may occupy 3 bits, the type field 522 may occupy 4 bits, the flow field 523 may occupy 1 bit, the ARQN field 524 may occupy 8 bits, and the HEC field 525 may occupy 8 bits. Therefore, the frame header 520 can occupy 24 bits.

In addition, the LLID field 5521 may occupy 2 bits, the flow field 5522 may occupy 1 bit, the length field 5523 may occupy 10 bits, the SEQN field 5524 may occupy 10 bits, and the RFU field 5525 may occupy 1 bit. Therefore, the payload header 552 can occupy 3 bytes.

It may be understood that, in a frame corresponding to the first data packet, an ARQN field in the frame may be empty. In a frame corresponding to the second data packet, an ARQN field in the frame may represent the plurality of indications by using a plurality of bits, and a payload field in the frame may be empty. For example, in the ARQN field, "1" indicates ACK, and "0" indicates NACK. Optionally, the ACK may also be referred to as a positive feedback, and the NACK may also be referred to as a negative feedback.

It should be understood that although the frame format in the some embodiments of this disclosure is described with reference to FIG. 5, the frame format 500 is merely an example. In actual application, another type of frame format may be used. This is not limited in this disclosure.

In some other embodiments of this application, with reference to FIG. 5, the first device 210 may generate a plurality of data frames, and each data frame has a frame format shown in FIG. 5. Payload bodies 554 in different data frames may carry different data, and the different data may correspond to different sequence numbers in the SEQN field 5524. Then, the first device 210 may send the plurality of data frames to the second device. In this form, the first device 210 can send the plurality of first data packets to the second device 220 by using the plurality of data frames.

Similarly, the second device 220 may generate a data frame, and a plurality of bits in the first field (namely, the ARQN field 524) in the data frame indicate whether the plurality of first data packets are successfully received. It may be understood that the first field (namely, the ARQN field 524) is in a header (for example, the header 520) in the data frame, and the first field may include a preset first quantity of bits (for example, n bits). For example, a plurality of bits in the n bits respectively indicate whether the plurality of first data packets are successfully received, and remaining bits in the n bits may be default values. It may be understood that the data frame further includes a second field (namely, the payload 550), and the second field has a preset second quantity of bits. Refer to FIG. 5. The second field may include the payload header field 552 and the payload body field 554. Then, the second device 220 may send the data frame. In this form, the second device 220 can send the second data packet to the first device 210 by using the data frame.

Still refer to FIG. 3. Optionally, in a process 330, the first device 210 sends a plurality of third data packets to the second device 220. For example, a quantity of the plurality of third data packets is still N1, and the process 330 is similar to the process 310. In a process 340, the second device 220 sends a fifth data packet to the first device 210, where a first field in the fifth data packet includes a plurality of indications indicating whether the plurality of third data packets are successfully received. The process 340 is similar to the process 320.

In some scenarios, similar to FIG. 4, if the second data packet indicates that the plurality of first data packets are all successfully received, that is, the plurality of indications in the first field in the second data packet all indicate ACK (for example, N1 "1"s), the plurality of third data packets are data packets to be subsequently sent by the first device 210.

It may be understood that in some scenarios, transmission of some or all of the plurality of first data packets may not succeed. For example, at least one first data packet in the plurality of first data packets is not successfully received by the second device 220. In this case, at least one indication for the at least one first data packet that is not successfully received indicates NACK. In this case, the plurality of third data packets sent by the first device 210 in the process 330 include the at least one first data packet. In other words, the first device 210 performs retransmission of the at least one first data packet.

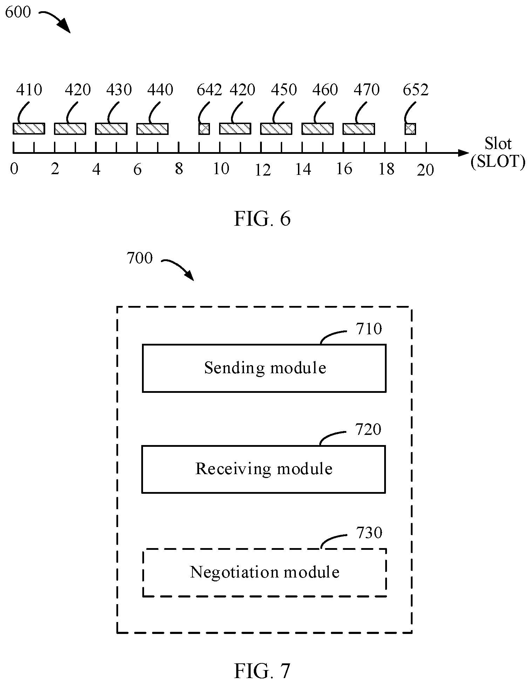

FIG. 6 is a schematic diagram of a time sequence 600 of data transmission according to the some embodiments of this disclosure. In FIG. 6, it is assumed that N1=4, and the plurality of first data packets are data packets 410 to 440. The first device 210 may start to send the data packet 410 at a slot 0, start to send the data packet 420 at a slot 2, start to send the data packet 430 at a slot 4, and start to send the data packet 440 at a slot 6. Therefore, the first device 210 sends the N1=4 first data packets from the slot 0 to a slot 8. Then, the second device 220 sends a second data packet 642 at a slot 9, and the second data packet 642 includes an indication 1, an indication 2, an indication 3, and an indication 4 that indicate whether the data packet 410, the data packet 420, the data packet 430, and the data packet 440 are successfully received. In addition, it is assumed that the indication 1, the indication 3, and the indication 4 each are ACK, but the indication 2 is NACK.

Then, the first device 210 may determine a plurality of third data packets based on the second data packet. Specifically, the plurality of third data packets include the retransmitted data packet 420, a subsequent to-be-transmitted data packet 450, a subsequent to-be-transmitted data packet 460, and a subsequent to-be-transmitted data packet 470. Further, the first device 210 may start to send the data packet 420 at a slot 10, start to send the data packet 450 at a slot 12, start to send the data packet 460 at a slot 14, and start to send the data packet 470 at a slot 16.

Thereafter, the second device 220 sends a data packet 652 at a slot 19, and the data packet 652 includes an indication 11, an indication 12, an indication 13, and an indication 14 indicating whether the data packet 420, the data packet 450, the data packet 460, and the data packet 470 are successfully received. In some examples, it is assumed that the indication 11, the indication 12, the indication 13, and the indication 14 in FIG. 6 each are ACK. In this case, in the example in FIG. 6, transmission of the data packets 410 to 470 is completed from the slot 0 to the slot 20. In other words, a duration is 20 slots. Compared with that in (b) in FIG. 1, it can be found that an amount of data to be transmitted increases by (7-4)/4=75% within the same duration.

According to embodiments of this disclosure, a receiving end (namely, the second device) for short-range wireless communication transmission can feed back acknowledgment indications corresponding to a plurality of data packets through one transmission. This implements multi-acknowledgment (Multi-ACK, MA), avoids frequent switching between sending and receiving, reduces a communication duration, and effectively improves air interface transmission efficiency while maintaining anti-interference performance and coexistence performance.

It should be noted that, although the foregoing embodiment is described by using an example in which the first device 210 sends data and the second device 220 sends a feedback, however, in an actual scenario, bidirectional data transmission may be performed. For example, the first device 210 sends N1 first data packets, the second device 220 sends N2 second data packets, and then, the first device 210 sends N1 third data packets. Each second data packet includes N1 indications corresponding to the N1 first data packets, and each third data packet includes N2 indications corresponding to the N2 second data packets. For example, the first device 210 and the second device 220 may determine, through negotiation, a quantity of data packets that are separately sent, namely, N1:N2.

For example, it is assumed that N1:N2=4:1. In this case, the payload body 554 in the second data packet may further include data sent by the second device 220 to the first device 210, and the SEQN field 5524 in the payload header 552 in the second data packet carries a sequence number of the data. For example, it is assumed that N1 :N2=4:2 or others. In this case, the payload body 554 in the second data packet may further include data sent by the second device 220 to the first device 210, and the SEQN field 5524 in the payload header 552 in the second data packet carries a sequence number of the data; and the second device 220 further continues to send at least one fourth data packet after the second data packet. Optionally, a first field (namely, an ARQN) in the fourth data packet may include a plurality of indications, and the plurality of indications are the same as the plurality of indications in the first field in the second data packet. This can ensure that the first device 210 successfully receives the plurality of indications, and avoid unnecessary retransmission of the plurality of first data packets. In some examples, the fourth data packet and the second data packet may include different data. For example, a sequence number in a SEQN field 5524 in the fourth data packet is different from a sequence number in the SEQN field 5524 in the second data packet. It may be understood that a process in which the second device 220 sends the second data packet and the at least one fourth data packet is similar to the foregoing process in which the first device 210 sends the plurality of first data packets. A process of bidirectional data transmission is similar to that in the foregoing embodiment. To avoid repetition, details are not described herein again.

It should be understood that, in embodiments of this disclosure, "first", "second", "third", and the like are only intended to indicate that a plurality of objects may be different, but two objects may be the same. The "first", "second", "third", and the like should not be construed as a limitation on embodiments of this disclosure.

It should be further understood that division into the manners, cases, categories, and embodiments in embodiments of this disclosure is only intended for ease of description, and should not constitute a particular limitation. The features in the manners, categories, cases, and embodiments may be combined with each other if logical.

It should be further understood that, the foregoing content is only intended to help a person skilled in the art better understand embodiments of this disclosure, instead of limiting the scope of embodiments of this disclosure. A person skilled in the art may make various modifications, changes, combinations, or the like according to the foregoing content. A modified, changed, or combined solution also falls within the scope of embodiments of this disclosure.

It should be further understood that the descriptions of the foregoing content focus on emphasizing a difference between the embodiments, and for the same or similar content, refer to each other. For simplicity, details are not further described herein.

FIG. 7 is a schematic block diagram of a communication apparatus 700 according to some embodiments of this disclosure. The apparatus 700 may be implemented by using software, hardware, or a combination thereof. In some embodiments, the apparatus 700 may be implemented as the first device 210 as shown in FIG. 2.

As shown in FIG. 7, the apparatus 700 includes a sending module 710 and a receiving module 720. The sending module 710 is configured to send a plurality of first data packets to a second device, where the communication apparatus 700 and the second device perform short-range wireless communication. The receiving module 720 is configured to receive a second data packet from the second device, where a first field in the second data packet includes a plurality of indications indicating whether the plurality of first data packets are successfully received.

In some embodiments, the first field includes at least one indication indicating that at least one first data packet of the plurality of first data packets is not successfully received, and the sending module 710 may be further configured to send a plurality of third data packets to the second device, where a quantity of the plurality of third data packets is equal to a quantity of the plurality of first data packets, and the plurality of third data packets include the at least one first data packet.

As shown in FIG. 7, the apparatus 700 may further include a negotiation module 730, configured to determine the quantity of the plurality of first data packets through negotiation with the second device.

For example, the first field is in a header of the second data packet, and the quantity of the plurality of first data packets is less than or equal to a quantity of bits of the first field.

Optionally, a second field in the second data packet is used to carry data sent by the second device to the communication apparatus, or the second field in the second data packet is empty.

In some examples, the receiving module 720 is further configured to receive at least one fourth data packet from the second device, where a first field in the at least one fourth data packet includes indications same as those in the first field in the second data packet.

In some embodiments, the sending module 710 may be configured to continuously send the plurality of first data packets in a frequency hopping manner

The apparatus 700 in FIG. 7 may be configured to implement each process performed by the first device 210 with reference to FIG. 3 to FIG. 6. For brevity, details are not described herein again.

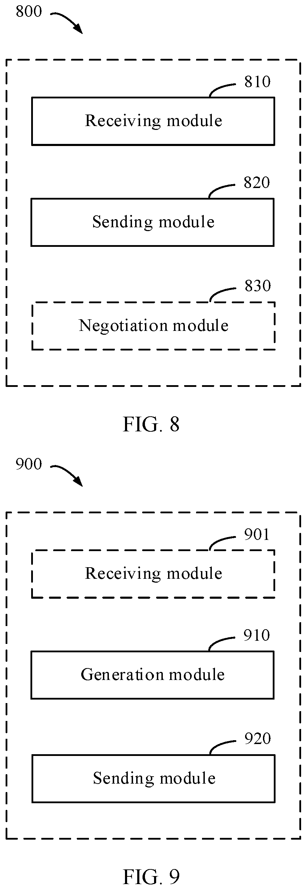

FIG. 8 is a schematic block diagram of a communication apparatus 800 according to some embodiments of this disclosure. The apparatus 800 may be implemented by using software, hardware, or a combination thereof. In some embodiments, the apparatus 800 may be implemented as the second device 220 as shown in FIG. 2.

As shown in FIG. 8, the apparatus 800 includes a receiving module 810 and a sending module 820. The receiving module 810 is configured to receive a plurality of first data packets from a first device, where the first device and the communication apparatus 800 perform short-range wireless communication. The sending module 820 is configured to send a second data packet to the first device, where a first field in the second data packet includes a plurality of indications indicating whether the plurality of first data packets are successfully received.

In some embodiments, the receiving module 810 fails to receive at least one first data packet in the plurality of first data packets, the first field includes at least one indication indicating that the at least one first data packet is not successfully received, and the receiving module 810 is further configured to receive a plurality of third data packets from the first device, where a quantity of the plurality of third data packets is equal to a quantity of the plurality of first data packets, and the plurality of third data packets include the at least one first data packet.

As shown in FIG. 8, the apparatus 800 may further include a negotiation module 830, configured to determine the quantity of the plurality of first data packets through negotiation with the first device.

For example, the first field is in a header of the second data packet, and the quantity of the plurality of first data packets is less than or equal to a quantity of bits of the first field.

Optionally, a second field in the second data packet is used to carry data sent by the second device to the communication apparatus, or the second field in the second data packet is empty.

In some examples, the sending module 820 is further configured to send at least one fourth data packet to the first device, where a first field in the at least one fourth data packet includes indications same as those in the first field in the second data packet.

In some embodiments, the receiving module 810 may be further configured to receive the plurality of first data packets from the first device in a frequency hopping manner.

The apparatus 800 in FIG. 8 may be configured to implement each process performed by the second device 220 with reference to FIG. 3 to FIG. 6. For brevity, details are not described herein again.

FIG. 9 is a schematic block diagram of a communication apparatus 900 according to some embodiments of this disclosure. The apparatus 900 may be implemented by using software, hardware, or a combination thereof. In some embodiments, the apparatus 900 may be implemented as the second device 220 as shown in FIG. 2.

As shown in FIG. 9, the apparatus 900 includes a generation module 910 and a sending module 920, and optionally further includes a receiving module 901. The generation module 910 is configured to generate a data frame, where a plurality of bits in a first field in the data frame indicate whether a plurality of first data packets from a first device are successfully received. The sending module 920 is configured to send the data frame to the first device.

In some embodiments, the first field is in a header of the data frame, the first field has a preset first quantity of bits, and a quantity of the plurality of first data packets is less than or equal to the first quantity of bits.

Optionally, the data frame further includes a second field, the second field has a preset second quantity of bits, the second field includes a payload header field and a payload body field, and a sequence number field in the payload header field indicates a sequence number of data in the payload body field. Optionally, the data frame further includes at least one of an access code field, a guard field, a synchronization field, and a trailer field.

For example, the receiving module 901 may be configured to receive the plurality of first data packets from the first device.

The apparatus 900 in FIG. 9 may be configured to implement each process performed by the second device 220 with reference to FIG. 3 to FIG. 6. For brevity, details are not described herein again.

Division into the modules or units in embodiments of this disclosure is an example, and is merely logical function division. In actual implementation, there may be another division manner. In addition, functional units in the disclosed embodiments may be integrated into one unit, or may exist alone physically, or two or more units are integrated into one unit. The integrated unit may be implemented in a form of hardware, or may be implemented in a form of a software functional unit.

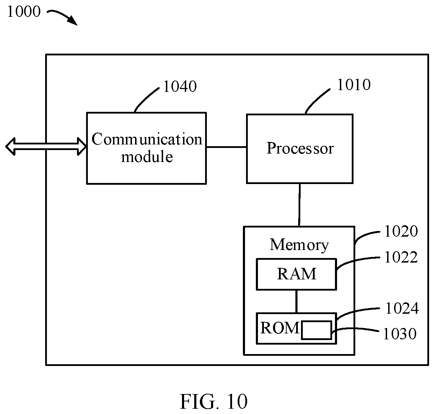

FIG. 10 is a schematic block diagram of an example device 1000 that may be used to implement an embodiment of this disclosure. The device 1000 may be implemented or included in the first device 210 or the second device 220 in FIG. 2. As shown in the figure, the device 1000 includes one or more processors 1010, one or more memories 1020 coupled to the processor 1010, and a communication module 1040 coupled to the processor 1010.

The communication module 1040 may be configured to perform bidirectional communication. The communication module 1040 may have at least one communication interface for communication. The communication interface may include any interface necessary for communicating with another device.

The processor 1010 may be of any type appropriate for a local technology network, and may include but is not limited to at least one or more of a general-purpose computer, a dedicated computer, a microcontroller, a digital signal processor (Digital Signal Processor, DSP), or a controller-based multi-core controller architecture. The device 1000 may have a plurality of processors, such as application-specific integrated circuit chips, and the processors in time belong to a clock synchronized with a main processor.

The memory 1020 may include one or more nonvolatile memories and one or more volatile memories. An example of the nonvolatile memory includes but is not limited to at least one of a read-only memory (Read-Only Memory, ROM) 1024, an erasable programmable read-only memory (Erasable Programmable Read-Only Memory, EPROM), a flash memory, a hard disk, a compact disc (Compact Disc, CD), a digital versatile disc (Digital Versatile Disc, DVD), another magnetic storage, and/or optical storage. An example of the volatile memory includes but is not limited to at least one of a random access memory (Random Access Memory, RAM) 1022, or another volatile memory that does not last for power-off duration.

A computer program 1030 includes computer-executable instructions executed by the associated processor 1010. The program 1030 may be stored in the ROM 1024. The processor 1010 may perform any appropriate action and processing by loading the program 1030 into the RAM 1022.

Embodiments of this disclosure may be implemented by using the program 1030, so that the device 1000 can perform any process discussed with reference to FIG. 2 to FIG. 15. Embodiments of this disclosure may alternatively be implemented by using hardware or a combination of software and hardware.

The program 1030 may be tangibly included in a computer-readable medium, and the computer-readable medium may be included in the device 1000 (for example, in the memory 1020) or another storage device that can be accessed by the device 1000. The program 1030 may be loaded from the computer-readable medium to the RAM 1022 for execution. The computer-readable medium may include any type of tangible nonvolatile memory, such as a ROM, an EPROM, a flash memory, a hard disk, a CD, or a DVD.

In some embodiments, the communication module 1040 in the device 1000 may be implemented as a transmitter and a receiver (or a transceiver), and may be configured to send/receive first scheduling indication information, second scheduling indication information, and transmission data. In addition, the device 1000 may further include one or more of a scheduler, a controller, and a radio frequency/antenna. Details are not described in this disclosure.

For example, the device 1000 in FIG. 10 may be implemented as an electronic device or a communication device, or may be implemented as a chip or a chip system in an electronic device or a communication device. This is not limited in embodiments of this disclosure.

An embodiment of this disclosure further provides a chip. The chip may include an input interface, an output interface, and a processing circuit. In embodiments of this disclosure, an input interface and an output interface may complete signaling or data interaction, and a processing circuit may complete generation and processing of signaling or data information.

An embodiment of this disclosure further provides a chip system, including a processor, configured to support a computing device in implementing a function in any one of the foregoing embodiments. In a possible design, the chip system may further include a memory, configured to store necessary program instructions and data. When the processor runs the program instructions, a device on which the chip system is installed is enabled to perform the method in any one of the foregoing embodiments. For example, the chip system may include one or more chips, or may include a chip and another discrete device.

An embodiment of this disclosure further provides a processor, configured to be coupled to a memory. The memory stores instructions, and when the processor runs the instructions, the processor is enabled to perform the method and the function in any one of the foregoing embodiments.

An embodiment of this disclosure further provides a computer program product including instructions. When the computer program product runs on a computer, the computer is enabled to perform the method and the function in any one of the foregoing embodiments.

An embodiment of this disclosure further provides a computer-readable storage medium. The computer-readable storage medium stores computer instructions. When a processor runs the instructions, the processor is enabled to perform the method and the function in any one of the foregoing embodiments.

Generally, various embodiments of this disclosure may be implemented by hardware or a dedicated circuit, software, logic, or any combination thereof. Some aspects may be implemented by hardware, and other aspects may be implemented by firmware or software, and may be performed by a controller, a microprocessor, or another computing device. Although aspects of embodiments of this disclosure are shown and illustrated as block diagrams, flowcharts, or other diagrams, it should be understood that the blocks, apparatuses, systems, technologies, or methods described in this specification may be implemented as, for example, non-limiting examples, hardware, software, firmware, dedicated circuits, logic, general-purpose hardware, controllers, other computing devices, or a combination thereof.

This disclosure further provides at least one computer program product tangibly stored on a non-transitory computer-readable storage medium. The computer program product includes computer-executable instructions, such as instructions included in a program module, and the instructions are executed in a device on a real or virtual processor of a target to perform the processes/methods as shown above with reference to the figures. Generally, the program module includes a routine, a program, a library, an object, a class, a component, a data structure, and the like that execute a particular task or implement a particular abstract data type. In various embodiments, functions of program modules may be combined or a function of a program module may be split as required. Machine-executable instructions for the program module may be executed locally or within a distributed device. In the distributed device, the program modules may be located in local and remote storage media.

Computer program code for implementing the methods disclosed in this disclosure may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed all on a computer, partially on a computer, as an independent software package, partially on a computer and partially on a remote computer, or all on a remote computer or server.

In a context of this disclosure, the computer program code or related data may be carried by any appropriate carrier, so that a device, an apparatus, or a processor can perform various processing and operations described above. Examples of the carrier include a signal, a computer-readable medium, and the like. For example, the signal may include propagation signals in electrical, optical, radio, sound, or other forms, such as carrier waves and infrared signals.

The computer-readable medium may be any tangible medium that includes or stores a program used for or related to an instruction execution system, apparatus, or device. The computer-readable medium may be a computer-readable signal medium or a computer-readable storage medium. The computer-readable medium may include but is not limited to an electronic, magnetic, optical, electromagnetic, infrared, or semiconductor system, apparatus, or device, or any appropriate combination thereof. More detailed examples of the computer-readable storage medium include an electrical connection with one or more wires, a portable computer disk, a hard disk, a random access memory (RAM), a read-only memory (ROM), an erasable programmable read-only memory (EPROM or flash memory), an optical storage device, a magnetic storage device, or any appropriate combination thereof.

In addition, although the operations of the methods disclosed in this disclosure are described in a particular order in the accompanying drawings, this does not require or imply that these operations need to be performed in the particular order or that all of the shown operations need to be performed to achieve a desired result. Instead, execution orders of the steps depicted in the flowcharts may change. Addition or optionally, some steps may be omitted, a plurality of steps may be combined into one step for execution, and/or one step may be decomposed into a plurality of steps for execution. It should further be noted that features and functions of two or more apparatuses according to this disclosure may be specified in one apparatus. On the contrary, features and functions of one apparatus described above may be divided into a plurality of apparatuses for materialization.

The implementations of this disclosure are described above. The foregoing descriptions are examples, are not exhaustive, and are not limited to the disclosed implementations. Many modifications and variations are apparent to a person of ordinary skill in the art without departing from the scope and spirit of the described implementations. Selection of terms used in this specification is intended to well explain implementation principles, actual application, or improvements to technologies in the market, or to enable another person of ordinary skill in the art to understand the implementations disclosed in this specification.

## Claims

1. A data transmission method for short-range wireless communication, comprising:
sending, by a first device, a plurality of first data packets to a second device, wherein the first device and the second device perform short-range wireless communication; and
receiving, by the first device, a second data packet from the second device, wherein a first field in the second data packet comprises a plurality of indications indicating whether the plurality of first data packets are successfully received.

2. The method according to claim 1, wherein the first field comprises at least one indication indicating that at least one first data packet of the plurality of first data packets is not successfully received, and the method further comprises:
sending, by the first device, a plurality of third data packets to the second device, wherein a quantity of the plurality of third data packets is equal to a quantity of the plurality of first data packets, and the plurality of third data packets comprise the at least one first data packet.

3. The method according to claim 1 or 2, further comprising:
determining, by the first device, the quantity of the plurality of first data packets through negotiation with the second device.

4. The method according to any one of claims 1 to 3, wherein the first field is in a header of the second data packet, and the quantity of the plurality of first data packets is less than or equal to a quantity of bits of the first field.

5. The method according to any one of claims 1 to 4, wherein a second field in the second data packet is used to carry data sent by the second device to the first device, or the second field in the second data packet is empty.

6. The method according to any one of claims 1 to 5, further comprising:
receiving, by the first device, at least one fourth data packet from the second device, wherein a first field in the at least one fourth data packet comprises indications same as those in the first field in the second data packet.

7. The method according to any one of claims 1 to 6, wherein the sending, by a first device, a plurality of first data packets to a second device comprises: continuously sending, by the first device, the plurality of first data packets in a frequency hopping manner.

8. A data transmission method for short-range wireless communication, comprising:
receiving, by a second device, a plurality of first data packets from a first device, wherein the first device and the second device perform short-range wireless communication; and
sending, by the second device, a second data packet to the first device, wherein a first field in the second data packet comprises a plurality of indications indicating whether the plurality of first data packets are successfully received.

9. The method according to claim 8, wherein the second device fails to receive at least one first data packet in the plurality of first data packets, the first field comprises at least one indication indicating that the at least one first data packet is not successfully received, and the method further comprises:
receiving, by the second device, a plurality of third data packets from the first device, wherein a quantity of the plurality of third data packets is equal to a quantity of the plurality of first data packets, and the plurality of third data packets comprise the at least one first data packet.

10. The method according to claim 8 or 9, further comprising:
determining, by the second device, the quantity of the plurality of first data packets through negotiation with the first device.

11. The method according to any one of claims 8 to 10, wherein the first field is in a header of the second data packet, and the quantity of the plurality of first data packets is less than or equal to a quantity of bits of the first field.

12. The method according to any one of claims 8 to 11, wherein a second field in the second data packet is used to carry data sent by the second device to the first device, or the second field in the second data packet is empty.

13. The method according to any one of claims 8 to 12, further comprising:
sending, by the second device, at least one fourth data packet to the first device, wherein a first field in the at least one fourth data packet comprises indications same as those in the first field in the second data packet.

14. The method according to any one of claims 8 to 13, wherein the receiving, by a second device, a plurality of first data packets from a first device comprises:
receiving, by the second device, the plurality of first data packets from the first device in a frequency hopping manner.

15. A data transmission method for short-range wireless communication, comprising:
generating, by a second device, a data frame, wherein a plurality of bits in a first field in the data frame indicate whether a plurality of first data packets from a first device are successfully received; and
sending, by the second device, the data frame to the first device.

16. The method according to claim 15, wherein the first field is in a header of the data frame, the first field has a preset first quantity of bits, and a quantity of the plurality of first data packets is less than or equal to the first quantity of bits.

17. The method according to claim 15 or 16, wherein the data frame further comprises a second field, the second field has a preset second quantity of bits, the second field comprises a payload header field and a payload body field, and a sequence number field in the payload header field indicates a sequence number of data in the payload body field.

18. The method according to any one of claims 15 to 17, wherein the data frame further comprises at least one of an access code field, a guard field, a synchronization field, and a trailer field.

19. A communication apparatus, comprising:
a transceiver, and
a processor, wherein the processor executes instructions to perform, by using the transceiver, the method according to any one of claims 1 to 7, or the method according to any one of claims 8 to 14, or the method according to any one of claims 15 to 18.

20. A computer-readable storage medium, wherein the computer-readable storage medium stores computer-executable instructions; and when the computer-executable instructions are executed by a processor, the method according to any one of claims 1 to 18 is implemented.

21. A computer program product, wherein the computer program product comprises computer-executable instructions, and when the computer-executable instructions are executed, the method according to any one of claims 1 to 18 is implemented.

22. A chip, comprising a processing circuit, configured to perform the method according to any one of claims 1 to 18.
